# FASCICULE DE BREVET EUROPEEN

(11) **EP 3 100 657 B1**
(45) Date de publication et mention de la délivrance du brevet: **06.01.2021**
(21) Numéro de dépôt: 16171514.9
(22) Date de dépôt: 26.05.2016
(51) Int. Cl.: A47J 27/08, A47J 27/09

(54) **AUTOCUISEUR POURVU D'UNE SOUPAPE DÉMONTABLE ET D'UN CAPTEUR DE TEMPÉRATURE**
SCHNELLKOCHTOPF MIT EINER ABNEHMBAREN VALVE UND EINER TEMPERATURSENSOR
PRESSURE COOKER PROVIDED WITH A DETACHABLE VALVE AND A TEMPERATURE SENSOR

(30) Priorité: 04.06.2015 FR 1555111
(43) Date de publication de la demande: 07.12.2016
(73) Titulaire: SEB S.A., 69130 Ecully (FR)
(72) Inventeur: RHETAT, Eric, 21000 DIJON (FR); BARAILLE, Eric, Laurent, 21121 FONTAINE LES DIJON (FR)
(74) Mandataire: Weber, Jean-François

(56) Documents cités:
- EP-A1- 2 898 800
- EP-A2- 1 342 440
- FR-A1- 2 634 914
- GB-A- 2 061 760
- KR-A- 20140 115 741

## Description

La présente invention se rapporte au domaine technique général des appareils de cuisson d'aliments sous pression, et en particulier aux appareils domestiques du genre autocuiseurs destinés à former une enceinte de cuisson capable de monter en pression afin d'assurer la cuisson sous pression de vapeur des aliments contenus en son sein.

La présente invention concerne plus particulièrement un appareil de cuisson d'aliments sous pression en présence de vapeur comportant une cuve, un couvercle ainsi qu'une soupape de régulation de pression montée sur le couvercle en correspondance avec un orifice ménagé à travers ledit couvercle, ladite soupape étant capable d'adopter une configuration de fuite autorisant la vapeur contenue au sein de l'appareil à s'échapper hors de ce dernier par l'orifice et la soupape selon une trajectoire d'échappement prédéterminée, ledit appareil comprenant en outre un capteur de température conçu pour pouvoir se trouver sur ladite trajectoire d'échappement.

Il est déjà connu de capter l'augmentation de température résultant du passage de la vapeur à travers un conduit de sortie disposé en aval de la soupape de régulation de pression équipant un autocuiseur, au moyen d'un capteur de température disposé au voisinage de la sortie dudit conduit. On connaît en particulier un autocuiseur équipé d'un module de commande qui est monté sur le couvercle et incorpore différents organes de commande (du verrouillage/déverrouillage, de la décompression, du niveau de pression de fonctionnement...), de régulation et de sécurité. Le module en question incorpore en particulier une soupape de régulation de pression qui est intégrée au sein dudit module, en étant montée de façon excentrée dans une chambre destinée à coiffer de façon étanche un orifice pratiqué à travers le couvercle. La soupape comprend un obturateur qui est soumis à une force de rappel élastique pour obturer ou dégager l'orifice en fonction du niveau de pression au sein de l'autocuiseur. La chambre communique en amont avec l'orifice (lequel coopère avec l'obturateur) et en aval avec un conduit d'échappement déporté latéralement, pour évacuer la vapeur vers l'extérieur.

Le capteur de température inclut une sonde qui est, selon le modèle d'autocuiseur concerné, soit implantée contre la face externe du conduit d'échappement précité, soit montée à la sortie dudit conduit pour être directement immergée dans le flux de vapeur s'échappant par le conduit d'échappement.

De tels appareils connus donnent globalement satisfaction, mais n'en présentent pas moins certains inconvénients, liés en particulier à la mise en œuvre d'un module incorporant la soupape. En effet, la mise en œuvre d'un module dans les appareils de l'art antérieur implique que le conduit d'échappement de vapeur évoqué précédemment est décalé latéralement relativement à la soupape elle-même. Or, il est indispensable de permettre à l'utilisateur de vérifier que le conduit n'est pas obstrué, pour des raisons évidentes de sécurité d'utilisation. Par conséquent, ces appareils connus mettent en œuvre un montage amovible du module sur le couvercle, afin de permettre à un utilisateur de détacher le module du couvercle à des fins d'inspection et de nettoyage. Toutefois, la conception et la construction de ces appareils de cuisson connus à module sont telles que l'opération de détachement du module s'avère en pratique relativement malaisée et fastidieuse. En définitive, si ces autocuiseurs connus sont globalement satisfaisants, notamment en matière de précision de la mesure de température, ils présentent en revanche des déficiences en ce qui concerne l'ergonomie et la facilité d'utilisation. En outre, ces conceptions modulaires connues s'avèrent être relativement coûteuses et n'autorisent que peu de flexibilité industrielle.

Le document EP-1 342 440 décrit le préambule de la revendication 1.

Les objets assignés à l'invention visent en conséquence à remédier aux différents inconvénients énumérés précédemment, et à proposer un nouvel appareil de cuisson sous pression qui est capable d'accéder de manière précise et fiable à la température en sortie de soupape, tout en étant de construction particulièrement simple, bon marché, flexible et sûre.

Un autre objet de l'invention vise à proposer un nouvel appareil de cuisson d'aliments sous pression qui est facile et pratique d'utilisation.

Un autre objet de l'invention vise à proposer un nouvel appareil de cuisson d'aliments sous pression dont le nettoyage est facilité.

Un autre objet de l'invention vise à proposer un nouvel appareil de cuisson d'aliments sous pression dont la conception permet une grande souplesse de fabrication industrielle.

Un autre objet de l'invention vise à proposer un nouvel appareil de cuisson d'aliments sous pression particulièrement robuste et compact.

Un autre objet de l'invention vise à proposer un nouvel appareil de cuisson d'aliments sous pression facile et rapide à fabriquer ou à réparer.

Un autre objet de l'invention vise proposer un nouvel appareil de cuisson d'aliments sous pression particulièrement compact et léger.

Un autre objet de l'invention vise à proposer un nouvel appareil de cuisson d'aliments sous pression qui présente une capacité élevée à suggérer de manière naturelle et intuitive sa propre utilisation.

Un autre objet de l'invention vise à proposer un nouvel appareil de cuisson d'aliments sous pression qui procure un haut niveau de sécurité d'utilisation.

Les objets assignés à l'invention sont atteints à l'aide d'un appareil de cuisson d'aliments sous pression conforme à l'objet de la revendication 1.

D'autres particularités et avantages de l'invention apparaîtront et ressortiront plus en détails à la lecture de la description faite ci-après, en référence aux dessins annexés, donnés à titre d'exemples purement illustratifs et non limitatifs, dans lesquels :

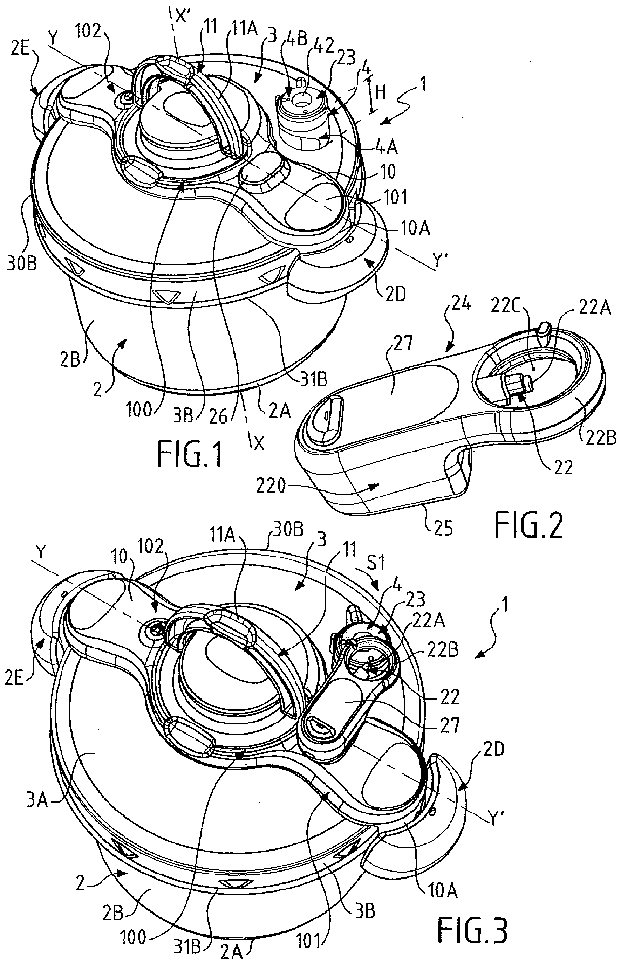

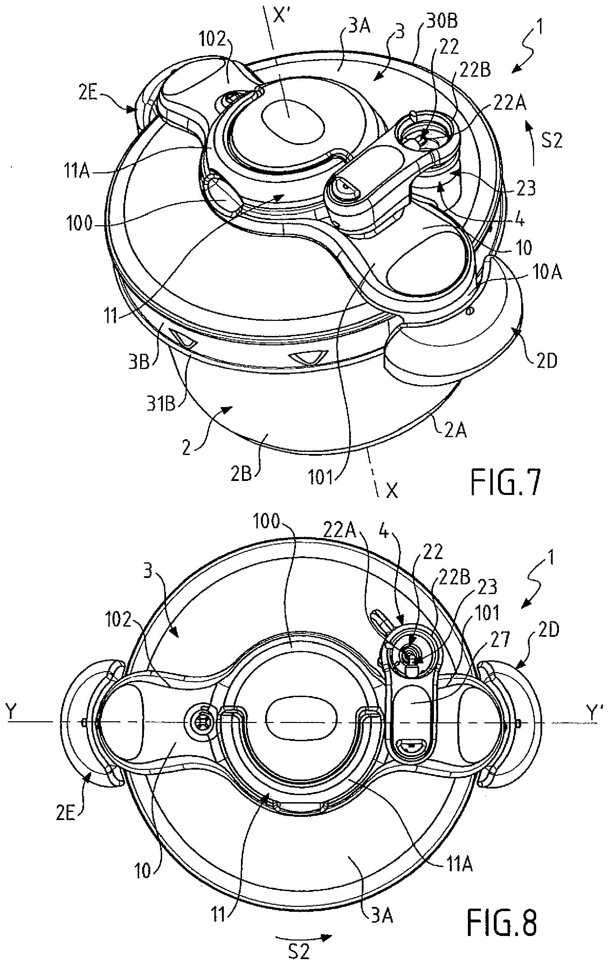

- La figure 1 illustre, selon une vue en perspective schématique, un appareil de cuisson d'aliments sous pression à verrouillage à baïonnette conforme à l'invention, dont le couvercle est réuni avec la cuve selon un agencement relatif prédéterminé (agencement de pré-verrouillage) à partir duquel il est possible de verrouiller le couvercle à la cuve par rotation du couvercle, ce dernier étant destiné à recevoir un module indépendant amovible (absent de l'appareil de la figure 1) qui embarque un minuteur ainsi qu'un capteur de température capable, lorsque le couvercle est verrouillé relativement à la cuve (figures 7 et 8), de déterminer la température d'un flux de vapeur issu de la soupape de régulation de pression montée sur le couvercle.
- La figure 2 illustre, selon une vue en perspective schématique, ledit module indépendant amovible destiné à équiper le sous-ensemble de couvercle de l'appareil de la figure 1.
- La figure 3 illustre, selon une vue schématique en perspective, l'appareil de la figure 1 avec le module indépendant de la figure 2 attaché au couvercle.
- La figure 4 illustre, selon une vue schématique en perspective de dessus, la cuve de l'appareil de cuisson sous pression des figures 1 et 3, ladite cuve étant en l'espèce munie de deux poignées latérales permettant sa manipulation et son transport.
- La figure 5 représente un sous-ensemble de couvercle de l'appareil des figures 1 et 3 qui inclut, outre le couvercle, au moins un support auquel est attaché à pivotement le couvercle, ledit sous-ensemble se trouvant dans une configuration de déverrouillage, prêt à venir coiffer la cuve de la figure 2 selon l'agencement relatif prédéterminé de pré-verrouillage illustré à la figure 1.
- La figure 6 est une vue de dessus de l'autocuiseur de la figure 3.
- La figure 7 illustre, selon une vue schématique en perspective, l'appareil de cuisson de la figure 1 avec cette fois le couvercle verrouillé relativement à la cuve (le sous-ensemble de couvercle étant en configuration de verrouillage), de sorte que le capteur de température du module indépendant surplombe la sortie de vapeur de la soupape de régulation de pression montée en saillie sur le couvercle.
- La figure 8 illustre, selon une vue de dessus, l'appareil de cuisson de la figure 7.
- La figure 9 illustre, selon une vue schématique en perspective, un détail de réalisation de l'autocuiseur de la figure 1 concernant l'organe de commande du verrouillage/déverrouillage et le dispositif de transformation du déplacement de l'organe de commande en pivotement du couvercle dont est équipé l'autocuiseur en question.
- La figure 10 illustre, selon une vue schématique en perspective, un détail de conception de l'autocuiseur des figures précédentes, permettant en particulier de visualiser la façon dont coopèrent le support et la poignée de cuve pour verrouiller le positionnement angulaire relatif, dans un plan horizontal, du sous-ensemble de couvercle et de la cuve lorsque ces derniers sont réunis selon ledit agencement relatif prédéterminé de pré-verrouillage susvisé.
- La figure 11 est une vue analogue à celle de la figure 9, à la différence près que l'organe de commande est dans sa position rétractée correspondant au verrouillage du couvercle et que le sous-ensemble de couvercle se trouve par conséquent en configuration de verrouillage.
- La figure 12 illustre, selon une vue schématique en perspective, un détail de réalisation de l'autocuiseur de la figure 11, concernant plus précisément l'organe de commande du verrouillage/déverrouillage et le dispositif de transformation du déplacement de l'organe de commande en pivotement du couvercle relativement au support.
- La figure 13 illustre, selon une vue schématique en perspective, un détail de réalisation du sous-ensemble de couvercle, permettant de visualiser une partie du mécanisme de commande du pivotement du couvercle relativement au support.
- La figure 14 illustre, selon une vue schématique en coupe, un détail de réalisation de l'appareil de la figure 11, permettant de visualiser la façon dont est positionné le capteur de température relativement à la soupape de régulation de pression lorsque le sous-ensemble de couvercle se trouve en configuration de verrouillage.
- La figure 15 illustre le sous-ensemble de couvercle de la figure 5 avec les premier et deuxième éléments constitutifs de la soupape de régulation de pression séparés l'un de l'autre, ledit sous-ensemble coopérant avec les poignées de cuve (cette dernière étant omise).

Comme illustré aux figures, l'invention concerne un appareil de cuisson 1 d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semi-professionnels. L'appareil 1 conforme à l'invention est conçu pour monter en pression exclusivement sous l'effet d'une source de chauffe (embarquée ou externe), sans apport de pression externe. L'appareil 1 de cuisson d'aliments sous pression constitue donc un autocuiseur, destiné préférentiellement à être disposé sur une plaque de cuisson indépendante pour en chauffer le contenu. L'appareil de cuisson 1 conforme à l'invention comporte au moins une cuve 2 formant récipient de cuisson, destiné à accueillir les aliments à cuire et présentant en l'espèce sensiblement une symétrie de révolution selon un axe vertical central X-X', lequel s'étend selon une direction qui s'apparente à la direction verticale lorsque l'appareil 1 est en fonctionnement normal, c'est-à-dire repose sur un plan horizontal. La cuve 2 comprend un fond 2A et une paroi latérale annulaire 2B qui s'élève entre ledit fond 2A et un bord supérieur libre 2C, qui est en l'espèce de forme circulaire, et qui délimite une ouverture d'accès à l'intérieur de la cuve 2. La conformation de ce bord supérieur libre 2C sera décrite plus en détails dans ce qui suit, en relation avec les moyens de verrouillage de l'appareil 1. Avantageusement, et comme illustré aux figures, l'appareil de cuisson 1 comprend au moins une poignée de cuve 2D qui est fixée à ladite cuve 2, de façon à faire saillie extérieurement de cette dernière, et de préférence deux poignées identiques 2D, 2E fixées sur la paroi latérale 2B de la cuve 2 de façon diamétralement opposée par rapport à l'axe central X-X'. L'appareil 1 conforme à l'invention comprend également un couvercle 3 destiné à être associé à la cuve 2 et verrouillé relativement à cette dernière pour former une enceinte de cuisson apte à monter en pression, c'est-à-dire une enceinte de cuisson suffisamment hermétique pour permettre la montée en pression de l'appareil 1. Afin d'obtenir ce caractère hermétique, étanche, l'appareil 1 inclut avantageusement une garniture d'étanchéité (non illustrée), formée de préférence par un joint annulaire souple, en élastomère par exemple, destinée à être interposée entre le couvercle 3 et la cuve 2, pour empêcher ainsi toute fuite incontrôlée de vapeur et/ou d'air entre l'intérieur de l'enceinte et l'extérieur. Le couvercle 3 présente avantageusement une forme conjuguée à celle de la cuve 2, par exemple une forme globalement discoïde, qui s'étend avantageusement dans un plan moyen sensiblement parallèle au plan moyen d'extension du fond 2A de la cuve 2 (c'est-à-dire un plan sensiblement horizontal en l'espèce) lorsqu'il est rapporté et verrouillé sur cette dernière. Dans le mode de réalisation illustré aux figures, le couvercle 3 inclut un élément de couverture discoïde 3A de forme et dimensions conjuguées à celles de l'ouverture d'accès délimitée par le bord supérieur libre 2C de la paroi latérale annulaire 2B de la cuve 2. Dans ce mode de réalisation, le couvercle 3 inclut également avantageusement une ceinture annulaire 3B, par exemple de forme sensiblement cylindrique ou tronconique, qui s'élève entre un premier bord circulaire 30B solidaire de l'élément de couverture discoïde 3A (en l'espèce au niveau de la périphérie de ce dernier) et un second bord circulaire libre 31B, lequel est par exemple lui-même prolongé par une collerette terminale. Comme illustré aux figures, l'élément de couverture discoïde 3A s'étend globalement selon un plan moyen horizontal, c'est-à-dire en l'espèce parallèle au plan moyen d'extension du fond 2A de la cuve 2 lorsque le couvercle 3 est associé à la cuve 2 pour former l'enceinte de cuisson, tandis que la ceinture annulaire 3B s'étend sensiblement verticalement, c'est-à-dire parallèlement à l'axe central X-X', la collerette terminale s'étendant quant à elle sensiblement horizontalement. Cela n'exclut bien entendu aucunement que l'élément de couverture discoïde 3A puisse être, tel qu'illustré aux figures, légèrement bombé ou incurvé localement, comme cela est bien connu en tant que tel. Dans le mode de réalisation illustré aux figures, la ceinture annulaire 3B est formée par un bord tombant qui s'étend vers le bas à partir de la périphérie de l'élément de couverture discoïde 3A. Dans ce mode de réalisation, le couvercle 3 est destiné à venir coiffer de façon sensiblement ajustée le sommet de la cuve 2, de sorte que la ceinture annulaire 3B entoure par l'extérieur le sommet de la paroi latérale annulaire 2B et le bord supérieur libre 2C, tandis que l'élément de couverture discoïde 3A repose en appui sur le bord libre 2C, par l'intermédiaire du joint d'étanchéité interposé entre la cuve 2 et le couvercle 3. Il est cependant parfaitement envisageable que la ceinture annulaire 3B soit alternativement destinée à être insérée au sein de la cuve 2, de façon à être entourée par, et contenue dans, la cuve 2, sans pour autant que l'on sorte du cadre de l'invention. Des organes de régulation 4 (décrit plus en détails ci-après) et de sécurité 6 sont avantageusement directement montés sur le couvercle 3.

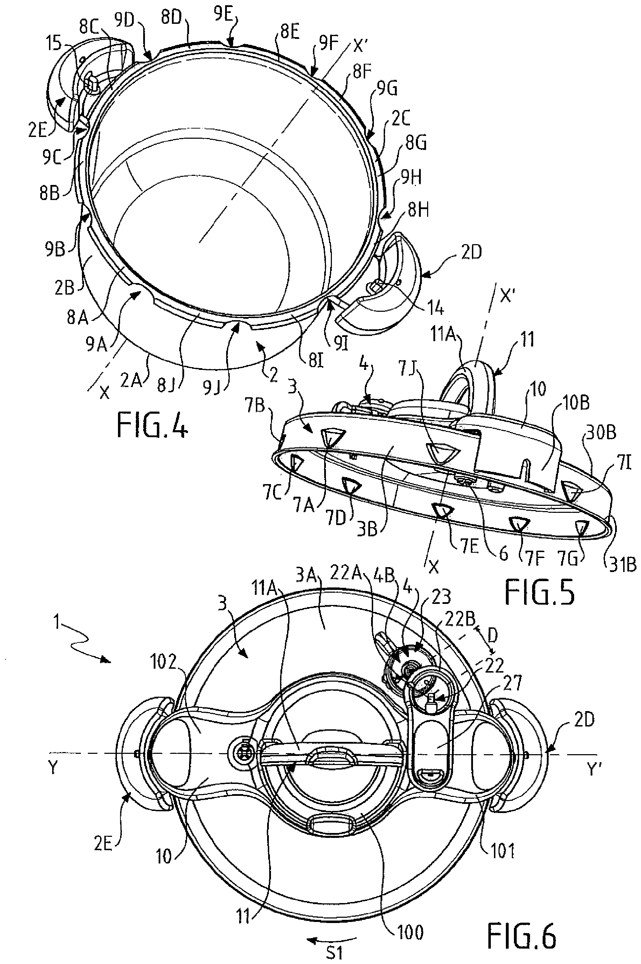

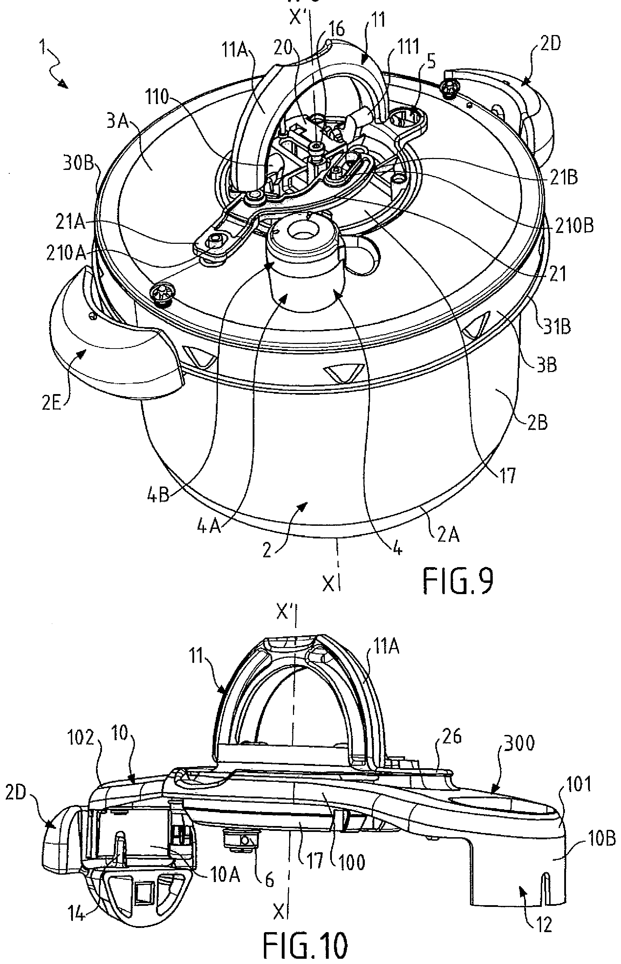

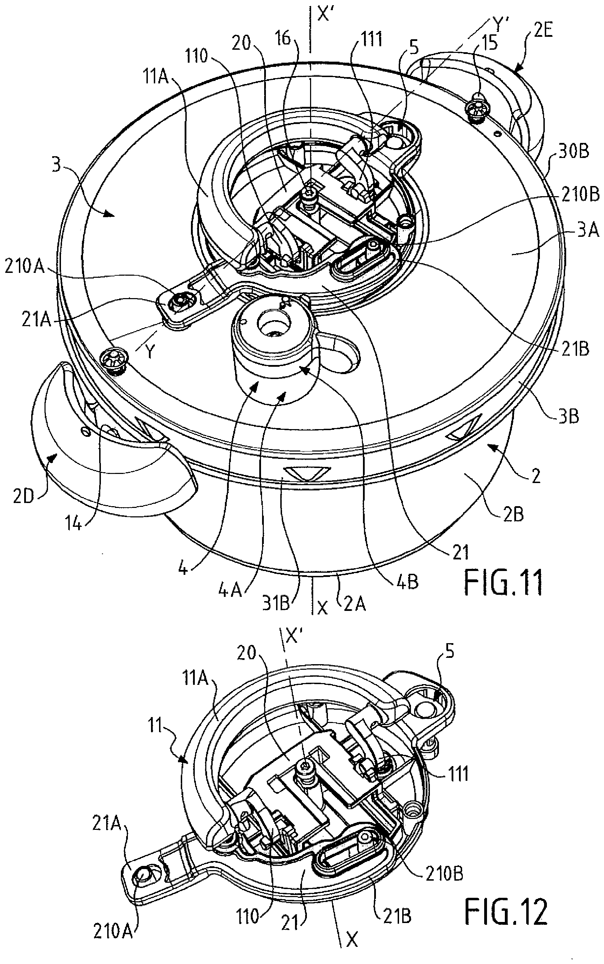

L'appareil 1 conforme à l'invention comprend avantageusement un système de verrouillage pour verrouiller le couvercle 3 à la cuve 2. Le système de verrouillage est conçu pour permettre à l'enceinte de cuisson formée par l'association du couvercle 3 et de la cuve 2 d'être pressurisée significativement (par exemple de l'ordre de 100 kPa au-dessus de la pression atmosphérique) sans risque de voir le couvercle 3 échapper sous l'effet de la pression régnant au sein de l'enceinte. De préférence, et conformément au mode de réalisation illustré aux figures, le système de verrouillage équipant l'appareil 1 est un système de verrouillage à baïonnette, conçu pour assurer le verrouillage et le déverrouillage du couvercle 3 relativement la cuve 2 par pivotement du couvercle 3 relativement la cuve 2, selon en l'espèce ledit axe vertical central X-X'. L'invention n'est cependant absolument pas limitée à la mise en œuvre d'un système de verrouillage à baïonnette, et l'appareil 1 peut alternativement être équipé d'un système de verrouillage d'un autre type. Par exemple, le système de verrouillage peut-être un système de verrouillage basé sur le déplacement radial, relativement au couvercle 3, d'un élément de verrouillage, comme par exemple une mâchoire ou un segment, destiné à coopérer avec une conformation complémentaire de la cuve 2 (par exemple un bord roulé pour un système de verrouillage à mâchoire, ou une lumière ménagée à travers la paroi latérale 2A lorsqu'il s'agit d'un système de verrouillage à segment). L'élément de verrouillage est ainsi monté dans ce cas entre d'une part une position de verrouillage, dans laquelle chaque mâchoire enserre le couvercle et le bord supérieur roulé de la cuve (ou dans laquelle chaque segment pénètre dans la lumière ménagée dans la paroi latérale de la cuve) et d'autre part une position de déverrouillage obtenue par déplacement radial centrifuge de l'élément de verrouillage à partir de sa position de verrouillage, dans laquelle les mâchoires ne sont plus en prise avec le bord roulé de la cuve (ou dans laquelle les segments sont extraits hors de la lumière), ce qui permet à l'utilisateur de désolidariser librement le couvercle 3 de la cuve 2. Un tel système de verrouillage est décrit par exemple dans les documents EP-0 691 096, EP-0 691 097 ou encore EP-2 204 111, dont le contenu est incorporé par référence. Alternativement, le système de verrouillage peut reposer sur la mise en œuvre d'un couvercle rentrant, qu'il s'agisse par exemple d'un couvercle rentrant flexible comme décrit dans le document EP-1 938 718 dont le contenu est incorporé par référence, ou d'un couvercle rentrant non flexible comme celui mis en œuvre par l'autocuiseur à trou d'homme décrit dans le document FR-2 796 541 dont le contenu est incorporé par référence. Il est également possible que le système de verrouillage soit un système de verrouillage à étrier, reposant sur la mise en œuvre d'un élément allongé transversal monté à déplacement vertical sur le couvercle et dont les extrémités libres sont destinées à coopérer avec des oreillons solidaires de la cuve. De manière générale, l'invention pourra mettre en œuvre tout type de système à verrouillage, et de préférence tout système de verrouillage reposant sur le déplacement relatif du couvercle et d'une pièce portée par le couvercle (qu'il s'agisse d'un étrier, d'un bras portant une mâchoire ou un segment, d'un support auquel est suspendu un couvercle flexible, etc.). De façon particulièrement préférentielle, le système de verrouillage est un système de verrouillage à baïonnette, permettant de faire passer l'appareil 1 d'une configuration d'attente de verrouillage, dans laquelle le couvercle 3 est rapporté sur la cuve 2 et repose librement sur cette dernière (figures 1 et 3), à une configuration de verrouillage dans laquelle la cuve 2 et le couvercle 3 interagissent pour empêcher leur libre séparation (cf. figure 7 et 8), et inversement. Ainsi, dans le mode de réalisation illustré aux figures, l'appareil 1 passe de sa configuration d'attente de verrouillage à sa configuration de verrouillage par rotation du couvercle 3 relativement à la cuve 2 selon une course angulaire prédéterminée autour de l'axe central X-X', dans un sens horaire S1, et passe de sa configuration de verrouillage à sa configuration d'attente de verrouillage par rotation du couvercle 3 relativement à la cuve 2 selon ladite course angulaire prédéterminée autour de l'axe central X-X' dans un sens antihoraire opposé S2 (alternativement, le sens S1 peut être antihoraire et le sens S2 peut être alors horaire). Le système de verrouillage à baïonnette de l'appareil de cuisson 1 comprend avantageusement à cet effet des première et deuxième séries d'excroissances 7A-7J, 8A-8J qui sont solidaires respectivement du couvercle 3 et de la cuve 2 et qui sont conçus, afin d'assurer le verrouillage et le déverrouillage du couvercle 3 relativement à la cuve 2, pour venir s'engager, respectivement se dégager, mutuellement par rotation du couvercle 3 relativement la cuve 2 autour de l'axe vertical central X-X' selon ladite course angulaire prédéterminée. Comme cela est bien connu en tant que tel, les excroissances 7A-7J, 8A-8J de chacune desdites première et deuxième séries sont destinées à coopérer deux à deux, c'est-à-dire que chaque excroissance de l'une desdites séries est amenée, par rotation du couvercle 3 relativement à la cuve 2, à passer sous une excroissance correspondante de l'autre série pour verrouiller le couvercle 3 relativement la cuve 2. Dans le mode de réalisation illustré aux figures, les excroissances 7A-7J de la première série, solidaires du couvercle 3, font saillie radialement vers l'intérieur du couvercle 3, tandis que les excroissances 8A-8J de la deuxième série, solidaires de la cuve 2, font saillie radialement à partir de la face externe de la paroi latérale 2B de la cuve 2, vers l'extérieur de cette dernière. Il est cependant parfaitement envisageable que les excroissances de verrouillage 7A-7J du couvercle fassent saillie vers l'extérieur du couvercle 3 et que les excroissances 8A-8J de cuve fassent alors saillies radialement vers l'intérieur de cette dernière. Dans l'exemple illustré aux figures, les excroissances 8A-8J de cuve sont formées par un rebord annulaire qui déborde vers l'extérieur à partir du bord supérieur libre 2C, des encoches 9A-9J étant ménagée à travers ledit rebord annulaire de façon à permettre le passage desdites excroissances 7A-7J de couvercle, de sorte que les portions dudit rebord annulaire qui s'étendent entre chaque encoche 9A-9J forment les rampes de cuve respectives destinées à coopérer avec les excroissances 7A-7J de couvercle qui forment les rampes de couvercle. Ainsi, lorsque le couvercle 3 vient coiffer la cuve 2, les excroissances 7A-7J de couvercle peuvent passer par les encoches 9A-9J pour se retrouver plus bas que le rebord annulaire. L'appareil 1 se trouve alors dans sa configuration de pré-verrouillage (également appelée configuration d'attente de verrouillage), à partir de laquelle la configuration de verrouillage peut être atteinte en faisant simplement tourner le couvercle 3 relativement à la cuve 2 selon l'axe vertical X-X', ce qui a pour effet de décaler angulairement les excroissances 7A-7J du couvercle 3 et les encoches 9A-9J du rebord annulaire, réalisant un verrouillage de type « à *baïonnette* ». De préférence, dans le mode de réalisation illustré aux figures, les excroissances de couvercle 7A-7B sont localisées sur la ceinture annulaire 3B du couvercle 3 à distance du second bord libre circulaire 31B de ladite ceinture annulaire 3B, de manière à ce que la ceinture annulaire 3B forme, en deçà desdits éléments en volume, une jupe d'auto-centrage du couvercle 3 relativement à la cuve 2. Conformément à l'invention, l'appareil 1 comprend un sous-ensemble de couvercle (illustré isolément par la figure 5) qui inclut à la fois au moins ledit couvercle 3 et un support 10 attaché audit couvercle 3, en l'espèce de façon permanente, de façon que ce dernier puisse se déplacer relativement audit support 10 entre deux positions correspondant respectivement à une configuration de déverrouillage et une configuration de verrouillage dudit sous-ensemble de couvercle. Dans le mode de réalisation illustré aux figures, le support 10 est attaché au couvercle 3 de façon que ce dernier puisse pivoter relativement audit support 10 entre lesdites deux positions selon l'axe vertical central X-X'. L'invention n'est cependant pas limitée à un montage à rotation du couvercle 3 relativement support 10. Il est par exemple tout à fait envisageable, dans le cas où le système de verrouillage est par exemple un système de verrouillage à couvercle flexible, que le couvercle 3 puisse se déplacer à translation relativement au support, comme décrit dans le document EP-1 938 718. La liaison pivot entre le couvercle 3 et le support 10 peut être réalisée par tout moyen connu. En l'espèce, les deux positions entre lesquelles le couvercle 3 peut pivoter relativement au support 10 sont séparées par une course angulaire prédéterminée correspondant à celle requise pour faire passer l'appareil 1 de sa configuration de pré-verrouillage (configuration d'attente de verrouillage) illustrée à la figure 1 à sa configuration de verrouillage illustrée par exemple aux figures 7 et 8. Avantageusement, le support 10 se présente, dans le mode de réalisation illustré aux figures, sous la forme d'une traverse, c'est-à-dire d'une pièce sensiblement allongée qui s'étend diamétralement sur le couvercle 3 et qui se prolonge en l'espèce à chacune de ses extrémités par des bords tombants respectifs 10A, 10B. De préférence, la traverse en question comporte une zone centrale élargie 100, par exemple de forme globalement circulaire, prolongée de part et d'autre par un premier bras 101 et un deuxième bras 102 qui eux-mêmes se terminent respectivement par lesdits bords tombants 10A, 10B. La portion centrale 100 est avantageusement pourvue d'un orifice central 100A dans lequel est destiné à être enfilé un axe 30 fixé sur le couvercle 3, au centre de ce dernier, et autour duquel le support 10 est destiné à tourner selon l'axe vertical central X-X'. De préférence, l'axe 30 est pourvu d'un évidement fileté destiné à coopérer avec une vis 16 afin de fixer le support 10 au couvercle 3 tout en permettant au couvercle 3 de pivoter autour de l'axe 30. Avantageusement, le support 10 comprend, outre la pièce en forme de traverse illustrée à la figure 6, une platine 17 qui présente une forme globalement circulaire sensiblement complémentaire de celle de la portion centrale 100 de la traverse et qui est destinée à être interposée entre ladite traverse et la face supérieure du couvercle 3 pour former un boîtier destiné à accueillir au moins en partie un mécanisme de commande. La traverse visible à la figure 10 est elle-même conçue pour être fixée (par exemple au moyen de plusieurs vis) de manière permanente à la platine 17, afin de former avec cette dernière un sous-ensemble de traverse unitaire, monobloc, maintenu sur le couvercle 3 au moyen de l'accouplement axe 30 / vis 16, lequel accouplement autorise le pivotement du couvercle 3 relativement au sous-ensemble de traverse précité formant en l'espèce le support 10. Conformément à l'invention, le sous-ensemble de couvercle et la cuve 2 sont conçus pour être réunis selon au moins un agencement relatif prédéterminé (illustré par exemple aux figures 1 et 3) permettant audit système de verrouillage de verrouiller le couvercle 3 à la cuve 2 par déplacement du couvercle 3 relativement au support 10 afin de faire passer le sous-ensemble de couvercle de sa configuration de déverrouillage à sa configuration de verrouillage. Plus précisément, l'agencement relatif prédéterminé est en l'espèce obtenu par réunion de la cuve 2 et du sous-ensemble de couvercle lorsque ce dernier se trouve en configuration de déverrouillage. Dans le mode de réalisation illustré aux figures, ledit agencement relatif prédéterminé permet au système de verrouillage à baïonnette de verrouiller le couvercle 3 à la cuve 2 par pivotement du couvercle 3 relativement au support 10 selon ledit axe vertical central X-X'. En d'autres termes, lorsque le sous-ensemble de couvercle est en configuration de déverrouillage, le couvercle 3 et le support 10 sont positionnés l'un relativement à l'autre de telle manière que l'accostage du support 10 sur la cuve 2 selon une position prédéterminée, correspondant audit agencement relatif prédéterminé, permet de faire passer les rampes de couvercle 7A-7J en deçà des rampes de cuve 8A-8J par les encoches 9A-9J séparant lesdites rampes de cuve 8A-8J, le sous-ensemble de couvercle coiffant alors la cuve 2 dans une position d'attente, à partir de laquelle il suffira de faire pivoter le couvercle 3 relativement à la cuve 2 pour verrouiller le couvercle 3 relativement à la cuve 2. Ainsi, une fois la cuve 2 et le sous-ensemble de couvercle en configuration de déverrouillage réunis selon l'agencement relatif prédéterminé de pré-verrouillage illustré à la figure 1, il suffit de maintenir le support 10 en position relativement à la cuve 2 et de faire pivoter le couvercle 3 relativement au support 10 selon la course angulaire prédéterminée susvisée afin d'amener les rampes de couvercle en correspondance avec les rampes de cuve, sous ces dernières, verrouillant ainsi le couvercle 3 relativement à la cuve 2 (figures 7 et 8). L'appareil 1 comprend par ailleurs un organe de commande manuelle 11 dudit système de verrouillage, conçu en l'espèce pour être manipulé par l'utilisateur de façon à permettre à ce dernier de contrôler le système de verrouillage afin de pouvoir avantageusement faire passer, par actionnement manuel de l'organe de commande 11, le sous-ensemble de couvercle de sa configuration de verrouillage à sa configuration de déverrouillage et vice-versa, ce qui permet ainsi de commander le passage de l'appareil 1 de sa configuration de pré-verrouillage (également appelée configuration d'attente de verrouillage - illustrée à la figure 1) à sa configuration de verrouillage (illustrée à la figure 8), et inversement. L'organe de commande 11 est attaché au support 10, en l'espèce de façon permanente, de façon à pouvoir être déplacé manuellement relativement à ce dernier entre des positions de verrouillage (figures 7 et 8) et de déverrouillage (figure 1) et inversement. En d'autres termes, le support 10 embarque avantageusement de façon permanente l'organe de commande 11, lequel conserve cependant une faculté de mobilité relativement audit support 10. L'organe de commande 11 fait ainsi avantageusement partie d'un ensemble unitaire de commande 300 (illustré à la figure 10 avec l'une des poignées de cuve 2D) monté, de préférence de façon permanente, sur le couvercle 3, et qui est formé par au moins le support 10 et l'organe de commande manuelle 11. Avantageusement, l'appareil 1 comprend également un dispositif de transformation du déplacement de l'organe de commande 11 en pivotement du couvercle 3 relativement au support 10 selon l'axe vertical central X-X', pour que lesdites positions de verrouillage et déverrouillage de l'organe de commande 11 correspondent respectivement auxdites configurations de verrouillage et déverrouillage du sous-ensemble de couvercle. L'utilisateur peut ainsi commander le passage du sous-ensemble de couvercle de sa configuration de déverrouillage à sa configuration de verrouillage, et vice versa, par déplacement manuel de l'organe de commande 11 relativement au support 10 entre ses positions de déverrouillage et de verrouillage, et inversement. Le dispositif de transformation, qui est en particulier visible aux figures 9 et 11 à 13 est donc conçu pour convertir le mouvement de l'organe de commande 11 relativement au support 10 en mouvement rotatif du couvercle 3 relativement à ce même support 10, en l'espèce selon ledit axe vertical central X-X', de sorte que l'utilisateur peut ainsi commander le verrouillage/déverrouillage par pivotement du couvercle 3 relativement au support 10 par simple manipulation de l'organe de commande 11, une fois le couvercle 3 rapporté sur la cuve 2 avec les rampes de couvercle disposées en deçà des rampes de cuve. Bien entendu, le dispositif de transformation susvisé est conçu en fonction de la nature du déplacement de l'organe de commande 11 relativement au support 10 et pourra mettre en œuvre tout composant d'entraînement (roue dentée, came, levier, biellette, etc.) requis. Avantageusement, ledit organe de commande 11 est monté à pivotement relativement audit support 10 selon un axe radial de pivotement Y-Y' qui est perpendiculaire à l'axe vertical central X-X', et est sécant à ce dernier. L'organe de commande 11 peut ainsi se présenter sous la forme d'un élément rotatif du type poignée, levier, manette, anse... Il est cependant tout à fait envisageable que l'organe de commande 11 soit plutôt monté à translation relativement support 10, et se présente par exemple dans ce cas sous la forme d'un élément coulissant tel qu'un bouton-poussoir, un curseur, etc. Avantageusement, ledit dispositif de transformation comprend un mécanisme démultiplicateur conçu pour entraîner le couvercle 3 en rotation autour dudit axe vertical central X-X' selon une course présentant une première amplitude angulaire prédéterminée a, en réponse à une rotation dudit organe de commande 11 autour dudit axe radial Y-Y' selon une course présentant une seconde amplitude angulaire prédéterminée β supérieure à ladite première amplitude angulaire prédéterminée a. Par exemple, l'organe de commande 11 est conçu pour pivoter autour dudit axe radial Y-Y' entre une position relevée (correspondant au déverrouillage) et une position rabattue (correspondant au verrouillage) séparées par une course présentant une amplitude angulaire prédéterminée β d'environ 90°, tandis que le couvercle 3 pivote relativement au support 10, en réponse au déplacement angulaire d'environ 90° de l'organe de commande 11 relativement au support 10, selon une course présente une amplitude angulaire prédéterminée α d'environ 15°. Conformément au mode de réalisation illustré aux figures, le dispositif de transformation comprend une pièce de transmission 20 montée mobile en translation dans un plan horizontal perpendiculaire audit axe vertical central X-X' relativement audit support 10. Dans ce mode de réalisation, le dispositif de transformation comprend un mécanisme de transformation du mouvement de pivotement de l'organe de commande 11 relativement au support 10 en mouvement de translation de ladite pièce de transmission 20 relativement audit support 10. Par exemple, le mécanisme de transformation en question est formé par une came 110, 111 solidaire de l'organe de commande 11, ladite came 110, 111 étant pourvue d'un pion qui est reçu dans un logement correspondant ménagé dans la pièce de transmission 20, de façon que le pivotement de l'organe de commande 11 entraîne le pivotement concomitant de la came 110, 111, laquelle repousse alors la pièce de transmission 20 dans le plan horizontal perpendiculaire à l'axe vertical central X-X'. Avantageusement, le dispositif de transformation comprend, conformément au mode de réalisation illustré aux figures, au moins un levier horizontal 21 monté à pivotement relativement au support 10 selon un axe vertical excentré Z-Z' qui est fixe par rapport audit support 10, parallèle audit axe vertical central X-X' et situé à une distance prédéterminée de ce dernier. De préférence, comme illustré aux figures, ledit levier horizontal 21 s'étend longitudinalement entre une première extrémité 21A articulée au couvercle 3 et une deuxième extrémité 21B articulée soit audit organe de commande 11 soit à une pièce de transmission (comme par exemple la pièce de transmission 20 évoquée ci-avant) qui fait partie du dispositif de transformation et qui est entraînée en déplacement relativement au support 10 par l'organe de commande 11, par exemple selon le mode de réalisation exposé précédemment. De préférence, ledit levier horizontal 21 est monté à pivotement relativement au support 10 en un point de pivotement situé entre lesdites première extrémité 21A et deuxième extrémité 21 B, de sorte que l'axe vertical excentré Z-Z' passe par une zone du levier horizontal 21 qui est située à distance à la fois de la première et de la deuxième extrémité 21A, 21B. L'articulation de la première extrémité 21A relativement au couvercle 3 est par exemple réalisée au moyen d'un premier goujon 210A qui est solidaire du couvercle 3 de manière à s'élever verticalement à partir de ce dernier. Ledit goujon 210A est avantageusement reçu dans une première gorge correspondante ménagée à la première extrémité 21A du levier horizontal 21, de sorte que ledit premier goujon 210A peut à la fois coulisser et tourner dans la première gorge en question. Le dispositif de transformation comporte également avantageusement un deuxième goujon 210B qui est en l'espèce solidaire de la pièce de transmission 20 et embarqué sur cette dernière. Ledit deuxième goujon 210B est avantageusement reçu dans une deuxième gorge complémentaire ménagée à la deuxième extrémité 21B du levier horizontal 21, de façon que ledit deuxième goujon 210B puisse à la fois coulisser et pivoter dans la deuxième gorge en question. Le déplacement en translation rectiligne de la pièce de transmission 20 dans le plan horizontal est ainsi converti en rotation du levier 21 autour de l'axe vertical excentré Z-Z', rotation qui est elle-même convertie en une rotation du couvercle 3 relativement au support 10 selon l'axe vertical central X-X'. L'invention n'est cependant absolument pas limitée à un tel mécanisme de transformation de mouvement et il est par exemple parfaitement envisageable de mettre en œuvre, en lieu et place d'un système à levier comme illustré, un système à biellette, à came ou à engrenage, ou tout autre système connu, sans pour autant que l'on sorte du cadre invention. Avantageusement, et comme illustré aux figures, l'organe de commande 11 comprend une anse 11A destinée être actionnée manuellement afin de pouvoir être déplacée à la main par un utilisateur entre deux positions de butées, préférentiellement stables, correspondant respectivement au verrouillage et au déverrouillage. Dans ce mode de réalisation préféré l'organe de commande 11 se présente donc sous la forme d'une pièce arquée, en forme de boucle, d'arche, avantageusement conçue pour pouvoir être saisie fermement, de préférence à pleine main, par un utilisateur. L'invention n'est toutefois pas limitée à la mise en œuvre d'une anse pour former l'organe de commande 11 et ce dernier peut par exemple être constitué par un levier sensiblement rectiligne, ou avec un profil en forme de T, de L, une forme de pommeau, de bouton évasé, etc., dont la conformation permet de préférence à l'utilisateur de soulever le sous-ensemble de couvercle par son intermédiaire. Avantageusement, comme illustré aux figures, l'organe de commande 11 est monté à pivotement relativement audit support 10 entre d'une part une position déployée (figure 1) qui forme ladite position de déverrouillage et dans laquelle ledit organe de commande 11 fait saillie verticalement, en l'espèce au droit du couvercle 3 vers l'extérieur, et d'autre part une position rétractée qui forme ladite position de verrouillage et dans laquelle ledit organe de commande 11 est rabaissé vers le couvercle 3. Dans sa position déployée, i'organe de commande 11 s'étend avantageusement selon une direction moyenne sensiblement parallèle audit axe vertical central X-X', tandis que dans sa position rétractée, il s'étend avantageusement selon une direction moyenne sensiblement perpendiculaire audit axe vertical central X-X', comme illustré aux figures.

Avantageusement, les support 10 et cuve 2 sont conçus pour interagir, directement ou indirectement, dès lors que le sous-ensemble de couvercle en configuration de déverrouillage et la cuve 2 sont réunis selon ledit agencement relatif prédéterminé, afin de sensiblement empêcher le support 10 de pouvoir pivoter relativement à la cuve 2 (en l'espèce selon ledit axe vertical central X-X') lorsque l'organe de commande 11 est déplacé entre ses positions de verrouillage et de déverrouillage (ou inversement). En d'autres termes, la réunion du sous-ensemble de couvercle en configuration de déverrouillage et de la cuve 2 selon l'agencement relatif prédéterminé (agencement de pré-verrouillage) illustré à la figure 1 entraîne un inter-verrouillage du support 10 et de la cuve 2 empêchant en l'espèce le support 10 de tourner selon l'axe vertical central X-X' tout en reposant sur la cuve 2. Ce verrouillage de la position angulaire relative du support 10 et de la cuve 2 permet au support 10 de jouer le rôle d'un bâti fixe immobile relativement à la cuve 2 et par rapport auquel le couvercle 3 peut pivoter autour de l'axe vertical central X-X' selon une course angulaire prédéterminée pour passer d'un état déverrouillé (illustré à la figure 1) à un état verrouillé (illustré à la figure 8). De préférence, lesdits support 10 et cuve 2 sont pourvus respectivement de conformations de support 12, 13 et de cuve 14, 15 complémentaires destinées à coopérer par emboîtement lorsque le sous-ensemble de couvercle en configuration de verrouillage et la cuve 2 sont réunis selon ledit agencement relatif prédéterminé pour former l'enceinte de cuisson (figure 1). Ledit emboîtement des conformations complémentaires de support 12, 13 et de cuve 14, 15 permet de verrouiller la position angulaire relative du support 10 et de la cuve 2 dans un plan horizontal, perpendiculaire audit axe vertical central X-X'. Dans le mode de réalisation illustré aux figures, la cuve 2 est pourvue de deux conformations de cuve 14, 15 disposées de façon diamétralement opposée relativement à l'axe vertical central X-X' et fixées sur la face externe de la paroi latérale 2B de la cuve 2, tandis que le support 10 comporte deux conformations de support 12, 13 complémentaires disposées de façon diamétralement opposée sur le couvercle 3 relativement à l'axe vertical central X-X', lesdites conformations de support 12, 13 étant en l'espèce disposées en regard de la face extérieure de la ceinture annulaire 3B du couvercle 3. Avantageusement, chaque conformation de cuve 14, 15 forme un élément mâle tandis que chaque conformation de support 12, 13 forme un élément femelle complémentaire dudit élément mâle, ledit élément mâle étant avantageusement destiné à être inséré dans ledit élément femelle pour établir une liaison de blocage en rotation selon l'axe vertical central X-X' entre le support 10 et la cuve 2. Avantageusement, ladite conformation de cuve 14, 15 est portée par ladite poignée de cuve 2D, 2E. Ainsi, dans le mode de réalisation illustré aux figures, chaque poignée de cuve 2D, 2E, fixée de manière permanente à la paroi latérale 2B de la cuve 2, embarque une conformation de cuve 14, 15 respective, qui se présente par exemple sous la forme d'une nervure formant un élément mâle. Une encoche est avantageusement ménagée dans le bord inférieur libre de chacun desdits bords tombants 10A, 10B du support 10, pour former un élément femelle complémentaire de la nervure formant préférentiellement l'élément mâle.

Conformément à l'invention, l'appareil 1 comporte différents organes de sécurité (par exemple un moyen de sécurité à l'ouverture 5, une soupape de sécurité à la surpression 6, *etc*.) et de fonctionnement, dont une soupape de régulation de pression 4 conçue pour maintenir la pression régnant dans l'enceinte de cuisson à une valeur prédéterminée de consigne sensiblement constante, dite pression de fonctionnement, laquelle excède la pression atmosphérique d'une valeur qui est comprise par exemple entre sensiblement 10 et 120 KPa, de préférence de l'ordre de 100 KPa. La soupape de régulation de pression 4 est en l'espèce montée sur le couvercle 3 en correspondance avec un orifice 23A ménagé à travers ledit couvercle 3. La soupape de régulation de pression 4 est ainsi montée en communication étanche avec l'orifice 23A de façon à être sensible au niveau de pression régnant au sein de l'enceinte de cuisson formée par le couvercle 3 et la cuve 2. Comme illustré aux figures, la soupape de régulation de pression 4 est avantageusement portée, de préférence directement, par le couvercle 3. La soupape de régulation 4 est capable d'adopter une configuration de fuite autorisant la vapeur contenue au sein de l'appareil 1 (c'est-à-dire au sein de l'enceinte de cuisson) à s'échapper hors de ce dernier par l'orifice 23A et la soupape 4 selon une trajectoire d'échappement prédéterminée, qui est avantageusement une trajectoire sensiblement verticale et ascendante. La soupape 4 adopte sa configuration de fuite lorsque la pression régnant à l'intérieur de l'appareil 1 excède la pression de fonctionnement, afin de ramener la pression régnant dans l'enceinte de cuisson à une valeur sensiblement inférieure ou égale à ladite pression de fonctionnement. Au contraire, lorsque la pression régnant au sein de l'appareil 1 est inférieure ou égale à la pression de fonctionnement, la soupape 4 adopte une configuration étanche empêchant la vapeur contenue au sein de l'appareil 1 de s'échapper hors de l'appareil 1 en passant par l'orifice 23A. Avantageusement, la soupape de régulation de pression 4 forme par elle-même et à elle seule une unité de soupape distincte et indépendante, et en particulier distincte et indépendante dudit ensemble unitaire de commande 300 évoqué précédemment. Par exemple, comme illustré aux figures, ladite unité de soupape est montée directement sur le couvercle 3, indépendamment du support 10, de sorte que le déplacement du couvercle 3 relativement au support 10 entraîne le déplacement de l'unité de soupape relativement au support 10. Il est cependant tout à fait envisageable que la soupape de régulation de pression 4 soit intégrée dans un sous-ensemble intégrant d'autres organes de commande et/ou de contrôle, sans pour autant que l'on sorte du cadre de l'invention. Le recours à une soupape de régulation 4 indépendante du support 10, et embarquée directement sur le couvercle 3 pour se déplacer avec ce dernier, présente cependant un certain nombre d'avantages, notamment en matière de fabrication, de nettoyage et de maintenance, qui ressortiront plus en détails de la description qui suit.

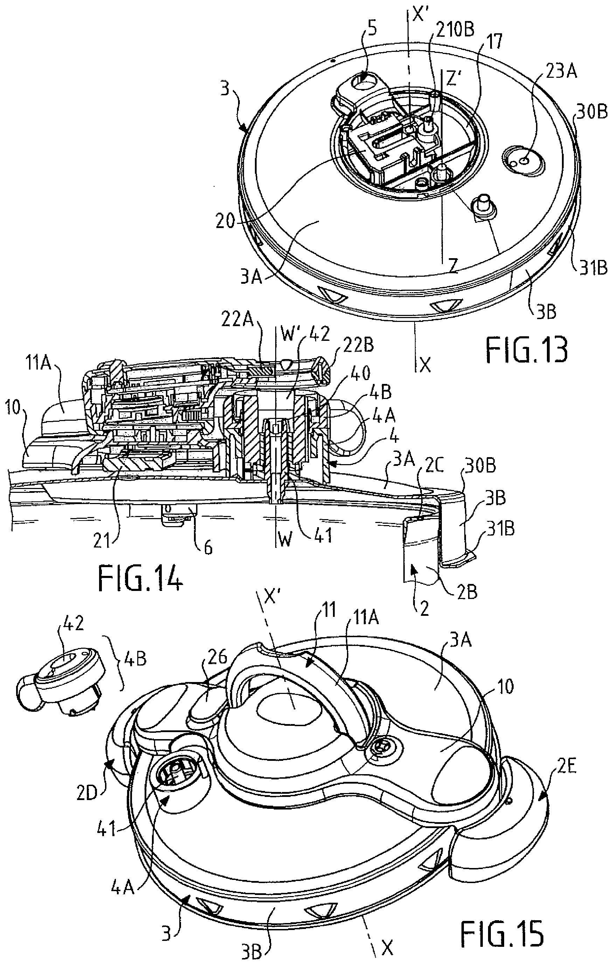

Conformément à l'invention, la soupape de régulation de pression 4 est constituée d'au moins un premier élément 4A conçu pour rester attaché en permanence au couvercle 3, en correspondance avec l'orifice 23A, et d'un deuxième élément 4B attaché de façon amovible audit premier élément 4A de façon que lesdits premier et deuxième éléments 4A, 4B puissent être séparés manuellement afin de faciliter le nettoyage de la soupape 4. Ainsi, contrairement à l'art antérieur exposé dans le préambule de la description qui précède, la soupape 4 de l'appareil 1 selon l'invention est elle-même directement démontable en deux sous-ensembles correspondant respectivement au premier élément 4A et au deuxième élément 4B, ce qui permet à un utilisateur de pouvoir très facilement inspecter et nettoyer au besoin l'intérieur de la soupape 4 sans avoir à démonter un module complet. De préférence, le deuxième élément 4B est attaché au première élément 4A par des moyens d'accouplement rapide, par exemple de type « *à baïonnette* » ou à clipsage, de sorte qu'un utilisateur de l'appareil 1 peut à volonté, et de préférence sans outil autre que ses seules mains, attacher ledit deuxième élément 4B audit premier élément 4A et le détacher de ce dernier. De préférence, la soupape 4 inclut elle-même un obturateur 40 mobile entre d'une part une position de fermeture, illustré par exemple à la figure 14, dans laquelle il empêche la vapeur contenue au sein de l'appareil 1 de s'échapper hors de l'appareil 1, c'est-à-dire en l'espèce hors de l'enceinte de cuisson, par l'orifice 23A, et d'autre part une position d'ouverture, dans laquelle il autorise la vapeur contenue au sein de l'appareil 1 à s'échapper hors de ce dernier selon ladite trajectoire d'échappement prédéterminée. Avantageusement, ladite soupape 4 inclut elle-même également un siège tubulaire 41 s'abouchant audit orifice 23A et se présentant de préférence sous la forme d'un conduit cylindrique qui s'élève verticalement entre une ouverture inférieure ouvrant sur l'intérieur de l'enceinte de cuisson et une ouverture supérieure opposée que l'obturateur 40 est destiné à venir obturer ou libérer en fonction du niveau de pression régnant au sein de l'enceinte de cuisson. De préférence, le siège tubulaire 41 présente un axe vertical de symétrie W-W', qui correspond sensiblement à l'axe de symétrie de l'orifice 23A auquel ledit siège tubulaire 41 est connecté, de préférence de façon permanente. Avantageusement, l'obturateur 40 mobile fait partie du deuxième élément 4B, tandis que le siège tubulaire 41 fait partie du premier élément 4A. Ainsi, grâce au caractère amovible de l'accouplement entre le deuxième élément 4B et le premier élément 4A, l'utilisateur peut aisément libérer le conduit formant le siège tubulaire 41 de l'obturateur 40, afin d'inspecter et nettoyer dans les meilleures conditions le siège tubulaire 41.

Avantageusement, la soupape 4 inclut un moyen de rappel conçu pour exercer une force de rappel sur l'obturateur 40, afin de maintenir ce dernier dans sa position de fermeture tant que le niveau de pression régnant au sein de l'enceinte du cuisson est inférieur ou égal à un niveau prédéterminé correspondant à la pression de fonctionnement. Le moyen de rappel est conçu pour que dès que la pression régnant au sein de l'enceinte de cuisson excède la pression de fonctionnement, la vapeur exerce sur l'obturateur 40 une force motrice qui est suffisante pour surmonter la force de rappel et écarter l'obturateur 40 du siège 41, pour permettre à la vapeur contenue dans l'enceinte de cuisson de s'échapper temporairement par l'orifice 23A, puis le conduit tubulaire formant le siège 41, à l'extérieur, jusqu'à ce que la pression régnant au sein de l'enceinte de cuisson soit ramené à un niveau inférieur ou égal à la pression de fonctionnement. La force de rappel en question peut être par exemple exercée par un ressort (soupape à tarage élastique) ou tout simplement par le poids du deuxième élément 4B qui embarque l'obturateur 40 (soupape à poids). L'obturateur 40 forme ainsi avantageusement un pointeau qui bouche hermétiquement le siège tubulaire 41 tant que la pression au sein de l'enceinte n'excède pas la pression de fonctionnement, et qui s'écarte dudit siège tubulaire 41, à l'encontre de la force de rappel, pour permettre à la vapeur de s'échapper par le siège tubulaire 41 à l'extérieur de l'appareil 1 (configuration de fuite de la soupape 4).

De préférence, ladite soupape 4 est pourvue d'un organe de canalisation de la vapeur conçu pour impartir à la vapeur s'échappant hors de l'appareil 1, par la soupape 4 lorsque cette dernière se trouve en configuration de fuite, une trajectoire d'échappement sensiblement ascendante, de bas en haut, et par exemple une trajectoire verticale. Dans l'exemple illustré aux figures, l'organe de canalisation en question est formé au moins en partie par le siège 41, par lequel s'échappe la vapeur selon une trajectoire verticale ascendante, parallèlement à l'axe W-W' (lui-même parallèle à l'axe vertical central X-X') lorsque l'obturateur 40 est repoussé dans sa position d'ouverture (correspondant à la configuration de fuite de la soupape 4).

Avantageusement, l'appareil 1 comprend en outre un capteur de température 22A conçu pour pouvoir se trouver sur ladite trajectoire d'échappement de la vapeur, pour déterminer la température de la vapeur à sa sortie de l'appareil 1, ou à tout le moins un accroissement de température lié à la fuite de vapeur susceptible de s'opérer par la soupape 4. De préférence, le capteur de température 22A est conçu pour pouvoir également se trouver, sur commande de l'utilisateur (et éventuellement si certaines conditions de fonctionnement de l'appareil 1 sont réunies) en dehors de la trajectoire d'échappement, afin en particulier de faciliter la séparation manuelle des premier élément 4A et deuxième élément 4B. L'invention repose ainsi, dans ce mode de réalisation particulièrement avantageux, sur la mise en œuvre d'un capteur de température 22A et d'une soupape 4 totalement indépendants l'un de l'autre tout en pouvant évoluer entre deux positions relatives, savoir une position fonctionnelle dans laquelle le capteur de température 22A se trouve sur la trajectoire d'échappement de la vapeur par la soupape 4 et une position de démontage dans laquelle le capteur de température 22A est décalé angulairement par rapport à la soupape 4, en l'espèce dans un plan horizontal perpendiculaire à l'axe vertical central X-X', pour faciliter le démontage de la soupape 4 par l'utilisateur à des fins d'inspection et/ou de nettoyage, ledit démontage consistant en l'espèce à détacher le deuxième élément 4B du premier élément 4A, lequel reste attaché à demeure au couvercle 3. Ledit capteur 22A est ainsi maintenu à distance de ladite soupape 4, y compris lorsqu'il se trouve sur ladite trajectoire d'échappement. Cela signifie que capteur 22A n'est avantageusement pas en contact de la soupape 4, qui est totalement libre de se déplacer relativement audit capteur 22A. Avantageusement, lesdits support 10 et couvercle 3 embarquent respectivement l'un (quelconque) et l'autre desdits capteur de température 22A et soupape 4 pour que lorsque le sous-ensemble de couvercle se trouve en configuration de verrouillage, le capteur de température 22A se trouve sensiblement sur ladite trajectoire d'échappement et pour que lorsque ledit sous-ensemble de couvercle se trouve en configuration de déverrouillage, ledit capteur de température 22A se trouve sensiblement en dehors de ladite trajectoire d'échappement.

Ainsi, dans ce mode de réalisation préférentiel illustré aux figures, le mouvement du couvercle 3 relativement au support 10 est utilisé pour déplacer la soupape 4 relativement au capteur de température 22A afin de faire ainsi passer lesdits capteur de température 22A et soupape 4 de la position relative fonctionnelle (permettant la captation de température en sortie de soupape 4) à la position relative de démontage évoquées précédemment. Avantageusement, le capteur de température 22A est porté par le support 10, tandis que la soupape 4 est quant à elle portée par le couvercle 3, étant entendu que l'inverse est tout à fait envisageable sans pour autant que l'on sorte du cadre de l'invention. Avantageusement, le capteur de température 22A est destiné à venir surplomber la soupape 4, comme illustré aux figures, lorsque la trajectoire d'échappement de la vapeur s'échappant de la soupape 4 est sensiblement verticale. Le capteur de température 22A se trouve dans ce cas préférentiellement sur l'axe W-W' de symétrie du siège 41, à la verticale ou au-dessus de l'orifice 23A du siège 41, lorsque le sous-ensemble de couvercle se trouve en configuration de verrouillage, permettant ainsi une captation précise de température mais empêchant la séparation aisée des premier et deuxième éléments 4A, 4B. Au contraire, lorsque le sous-ensemble de couvercle se trouve en configuration de déverrouillage (cf. figure 3), le capteur de température 22A est décalé angulairement relativement audit axe W-W' ; il ne croise donc sensiblement pas la trajectoire d'échappement de la vapeur et n'est donc alors pas en mesure de déterminer de façon fiable la température de la vapeur à la sortie de la soupape 4, mais il facilite l'accès manuel à la soupape 4 ce qui rend plus aisée la séparation des premier et deuxième éléments 4A, 4B.

De préférence, afin d'améliorer encore la fiabilité de la mesure, l'organe de canalisation de la vapeur dont est avantageusement pourvue la soupape 4 comporte non seulement le siège tubulaire 41, à l'amont de l'obturateur mobile 40, mais également un organe canalisateur aval 42, qui présente sensiblement une forme tubulaire et s'étend sensiblement vers le haut à partir de l'extrémité supérieure du siège 41. L'organe canalisateur aval 42 se présente sensiblement sous la forme d'un conduit cylindrique et fait avantageusement partie du deuxième élément 4B. Ainsi, lorsque le deuxième élément 4B est séparé du deuxième élément 4A, l'utilisateur peut aisément vérifier et nettoyer non seulement le conduit tubulaire formant le siège 41, mais également le conduit tubulaire formant l'organe canalisateur aval 42. Afin de ne pas perturber la mesure de température par le capteur 22A, ladite soupape 4 présente avantageusement, selon la direction verticale W-W', une hauteur hors-tout H sensiblement invariable, afin de ne pas modifier la distance séparant verticalement le sommet de la soupape 4 (correspondant en l'espèce au sommet de l'organe canalisateur aval 42) du capteur 22A, en l'espèce lorsque le sous-ensemble de couvercle se trouve en configuration de verrouillage. De préférence, la vapeur s'échappant hors de l'enceinte par l'orifice ménagé à travers le couvercle 3 est guidé, à l'aval dudit orifice, exclusivement par des moyens (formant ledit organe de canalisation) qui font partie de la soupape 4 et sont embarqués sur cette dernière.

Avantageusement, l'appareil 1 comprend un module indépendant 24 (illustré séparément à la figure 2), qui constitue d'ailleurs en tant que tel une invention, et qui embarque au moins ledit capteur de température 22A. Ledit module indépendant 24 est conçu pour être attaché de façon amovible au support 10 (ou au couvercle 3 si la soupape 4 est elle-même portée par le support 10), de sorte qu'un utilisateur de l'appareil 1 peut à volonté, et de préférence sans outil autre que ses seules mains, attacher ledit module indépendant 24 audit support 10 et le détacher de ce dernier, ce qui permet notamment de faciliter l'accès à la soupape 4, en vue par exemple de séparer les premier et deuxième éléments 4A, 4B. À cette fin, lesdits module indépendant 24 et support 10 sont pourvus de moyens d'attaches complémentaires 25, 26 respectifs conçus pour coopérer afin d'attacher de façon amovible le module indépendant 24 au support 10. Cette coopération peut être de toute nature. Par exemple, les moyens d'attache complémentaires 25, 26 peuvent être conçus pour coopérer par attraction magnétique, auquel cas le moyen d'attache 26 associé au support 10 est par exemple formé par un aimant tandis que le module indépendant 24 embarque une substance ferromagnétique capable d'être attirée par l'aimant en question. De façon préférentielle, la coopération entre les moyens d'attache complémentaires 25, 26 est de nature mécanique, comme dans l'exemple illustré aux figures, où le module indépendant 24 est conçu pour être fixé sur le support 10 par clipsage, c'est-à-dire par emboîtement à force d'un élément mâle formant en l'espèce le moyen d'attache 26 du support et un élément femelle formant en l'espèce le moyen d'attache 25 du module indépendant 24 (ou inversement). Les moyens d'attache complémentaires 25, 26 sont avantageusement conçus pour immobiliser complètement le premier dispositif 22 sur le support 10, c'est-à-dire qu'ils sont conçus pour réaliser une liaison d'encastrement entre le support 10 et le premier dispositif 22. Il est cependant tout à fait envisageable que le premier dispositif 22 soit fixé au support 10 avec une faculté de mobilité, et/ou qu'il soit attaché de manière permanente, inamovible, au support 10.

Avantageusement, le capteur de température 22A est conçu pour délivrer un signal d'information et/ou de commande, par exemple de nature électrique. Dans ce cas, l'appareil 1 comprend avantageusement au moins une unité de traitement conçue pour exploiter le signal d'information et/ou de commande, afin d'élaborer, à partir dudit signal qui est de préférence de nature électrique comme évoqué précédemment, une information intelligible par un utilisateur et/ou une instruction de commande pour contrôler le fonctionnement de l'appareil 1 lui-même ou d'un dispositif externe (ordiphone ou tablette tactile par exemple). Dans le mode de réalisation illustré aux figures, ledit module indépendant 24 incorpore ladite unité de traitement. Il est cependant tout à fait envisageable que l'unité de traitement soit distincte dudit module indépendant 24, voire même qu'elle soit totalement déportée de l'appareil 1, auquel cas le capteur 22A est avantageusement conçu pour communiquer, via une liaison filaire ou sans fil (par ondes radio par exemple) avec l'unité de traitement. Dans un mode de réalisation préférentiel, l'appareil 1 comprend plusieurs unités de traitement dont l'une est embarquée par le module indépendant 24 et l'autre embarquée par un dispositif externe formé avantageusement par un ordiphone capable de communiquer, par exemple par une liaison Bluetooth ®, avec le module indépendant 24. Dans le mode de réalisation illustré aux figures, l'unité de traitement est conçue pour exploiter ledit signal d'information et/ou de commande afin d'élaborer une information, l'appareil 1 comprenant également un moyen d'affichage 27, comme par exemple un écran (par exemple un écran LCD, tactile ou non), un afficheur ou un cadran, qui est relié à ladite unité traitement par une liaison fonctionnelle appropriée, filaire ou non, pour afficher ladite information et la rendre ainsi accessible et intelligible à l'utilisateur de l'appareil 1. De préférence, ledit module indépendant 24 incorpore ledit moyen d'affichage 27. L'invention n'est toutefois absolument pas limitée à la mise en œuvre d'un module indépendant 24 équipé d'un moyen d'affichage 27, et il est par exemple tout à fait envisageable, sans pour autant que l'on sorte du cadre de l'invention, que le module indépendant 24 soit dépourvu de tout moyen d'affichage, ce dernier étant déporté sur un terminal externe indépendant (et par exemple formé par l'écran d'un ordiphone) qui communique par une liaison sans fil avec le module indépendant 24.

Avantageusement, l'appareil 1 comprend un minuteur relié fonctionnellement audit capteur de température 22A, lequel est conçu pour détecter une élévation de température consécutive à un échappement de vapeur résultant du passage de l'obturateur 40 en position d'ouverture, et pour émettre en retour un signal de déclenchement dudit minuteur. Ainsi, l'information de température récoltée par le capteur 22A est avantageusement utilisée par ladite unité de traitement pour déclencher le décompte d'une durée de cuisson par un minuteur relié fonctionnellement au capteur 22A. L'unité de traitement est par exemple conçue pour détecter la variation significative de température résultant de l'échappement du tout premier jet de vapeur lorsque la pression de fonctionnement vient d'être dépassée pour la première fois, afin de déclencher à cet instant le décompte de la durée de cuisson par le minuteur, conformément par exemple à l'enseignement du document EP-1 458 268, dont le contenu est incorporé par référence. Le minuteur en question est avantageusement embarqué dans le module indépendant 24, et forme ainsi tout ou partie de ladite unité de traitement. Dans ce cas, le module indépendant 24 est avantageusement pourvu de moyens de commande (par exemple des boutons) permettant à un utilisateur de régler la durée de cuisson décomptée par le minuteur à la valeur de son choix, l'écran 27 pouvant afficher la valeur en question puis le décompte de cette valeur le moment venu. Lorsque le minuteur est avantageusement incorporé au module indépendant 24 amovible, il est possible à un utilisateur de détacher le module indépendant 24 du support 10 une fois le décompte de la durée de cuisson enclenchée, pour garder ainsi avec lui le minuteur et être alerté de la fin du décompte même si l'utilisateur est éloigné de l'appareil 1.

Afin d'améliorer encore la précision de mesure de température et/ou afin de protéger le capteur de température 22B contre d'éventuels chocs (en cas de chute par exemple), le module indépendant 24 comprend avantageusement un élément de protection 22B délimitant un espace intérieur fermé 22C (cf. figure 2) qui accueille ledit capteur de température 22A, afin de protéger ce dernier d'éventuels courants d'air qui pourraient perturber la mesure, de limiter la déperdition latérale de vapeur (qui pourrait nuire à la captation de température) et de protéger le capteur de température 22A contre d'éventuels chocs (en cas de chute par exemple). Comme illustré aux figures, l'élément de protection 22B comprend de préférence un élément annulaire entourant ledit espace intérieur fermé 22C. L'élément de protection 22B forme ainsi avantageusement une boucle qui s'étend sensiblement selon un plan moyen horizontal perpendiculaire à l'axe vertical central X-X', le capteur 22A formant une excroissance qui s'étend vers l'intérieur de ladite boucle jusqu'au centre de cette dernière, de sorte que la partie active dudit capteur 22A se retrouve sensiblement au centre de ladite boucle formée par l'élément annulaire. Comme illustré aux figures, lorsque le sous-ensemble de couvercle se trouve en configuration de verrouillage, l'axe W-W' de symétrie de l'orifice 23A passe par ledit centre de ladite boucle, et donc par le capteur 22A, et plus précisément par la partie active de ce dernier. Avantageusement, comme illustré aux figures, le module indépendant 24 comprend un corps principal 220 (cf. figure 2) qui porte lesdits capteur de température 22A et élément de protection 22B de façon qu'ils fassent saillie latéralement dudit corps principal 220, en porte-à-faux, pour surplomber le couvercle 3. Dans ce mode de réalisation préférentiel, le corps principal 220 accueille un moyen d'affichage 27 (par exemple un écran LCD sur sa face supérieure) ainsi qu'un minuteur paramétrable au moyen de boutons de commande portés eux aussi par le corps principal 220. L'invention concerne d'ailleurs en tant que tel un module indépendant 24 incorporant un capteur de température 22A, ledit module 24 étant conçu pour être rapporté sur le couvercle 3 d'un appareil 1 de cuisson d'aliments sous pression, et comprenant un élément de protection 22B délimitant un espace intérieur fermé 22C qui accueille ledit capteur de température 22A, ledit élément de protection 22B comprenant de préférence un élément annulaire entourant ledit espace intérieur fermé 22C.

De façon préférentielle, le module indépendant 24 comprend un corps principal 220 qui porte lesdits capteur de température 22A et élément de protection 22B, de façon qu'ils fassent saillie dudit corps principal 220.

Le fonctionnement de l'appareil de cuisson 1 illustré aux figures va maintenant être décrit brièvement. L'utilisateur détache tout d'abord le module indépendant 24 du support 10, puis sépare le deuxième élément 4B de la soupape 4 du premier élément 4A, afin de s'assurer que les conduits d'évacuation de vapeur 41, 42 ne sont pas obstrués. L'utilisateur remonte ensuite le deuxième élément 4B sur le premier élément 4A, par exemple par clipsage ou verrouillage à baïonnette (auquel cas les premier et deuxième éléments 4A, 4B sont pourvus de rampes de verrouillage respectives). Puis l'utilisateur attache le module indépendant 24 au support 10, et saisit ensuite le sous-ensemble de couvercle (illustré à la figure 5) par l'anse 11A pour soulever ledit sous-ensemble de couvercle en vue de le rapporter sur la cuve 2 afin de fermer cette dernière, qu'il aura préalablement rempli avec les aliments à cuire. L'utilisateur réunit ainsi le sous-ensemble de couvercle en configuration de déverrouillage et la cuve 2 selon l'agencement relatif prédéterminé illustré notamment à la figure 1. Dans cette configuration, le capteur de température 22A et l'axe W-W' de la soupape sont décalés angulairement, comme illustré à la figure 3. Dans cet agencement, le capteur 22A n'est pas capable de détecter correctement la variation de température correspondant à l'échappement des premières fumerolles de vapeur lorsque la pression de fonctionnement est atteinte. Puis l'utilisateur rabat l'anse 11A selon une course angulaire β d'environ 90°, jusqu'à atteindre une position rabattue de butée illustrée notamment aux figures 7 et 8. Ce déplacement de l'anse 11A de sa position déployée à sa position rabattue entraîne le pivotement du couvercle 3 relativement au support 10 d'un angle α d'environ 15°, permettant aux rampes de couvercle de venir en correspondance sous les rampes de cuve selon une configuration de verrouillage permettant la montée en pression. Le pivotement du couvercle 3 relativement au support 10 entraîne concomitamment le déplacement de la soupape relativement au support 10 et au capteur 22A, de façon à amener ladite soupape sous ledit capteur 22A, ce dernier se retrouvant alors sur la trajectoire d'échappement de la vapeur. Le cycle de cuisson peut alors débuter. Dès que la pression régnant au sein de l'enceinte de cuisson atteint la valeur de consigne (pression de fonctionnement), la vapeur s'échappe une première fois par le conduit de sortie de la soupape, formé par le siège 41 et l'organe canalisateur aval 42, venant ainsi balayer le capteur 22A qui détecte alors cette brusque élévation de température et délivre en retour un signal de commande du minuteur embarqué dans le module indépendant 24, lequel porte en l'espèce également le capteur de température 22A. A l'issue du cycle de cuisson, et une fois la pression régnant au sein de l'enceinte retombée à un niveau prédéterminé de sécurité, l'utilisateur n'a plus qu'à relever l'anse 11A pour faire pivoter le couvercle 3 relativement au support 10 en sens inverse et désengager ainsi les rampes de cuve et de couvercle, permettant la séparation du couvercle 3 et de la cuve 2. Le sous-ensemble de couvercle se retrouve alors en configuration de déverrouillage, configuration facilitant l'accès à la soupape 4 qui est décalée angulairement relativement au capteur 22A, de sorte que l'utilisateur peut à nouveau facilement séparer les premier et deuxième éléments 4A,4B en vue de nettoyer la soupape d'éventuels débris alimentaire qui pourraient s'être introduits et être restés coincés dans le siège 41 et/ou l'organe de canalisation aval 42. L'accès à la soupape 4 est rendu encore plus facile si l'utilisateur détache le module indépendant 24 du support 10 comme illustré à la figure 1.

## Revendications

1. Appareil (1) de cuisson d'aliments sous pression en présence de vapeur comportant une cuve (2), un couvercle (3) ainsi qu'une soupape de régulation (4) de pression montée sur le couvercle (3) en correspondance avec un orifice ménagé à travers ledit couvercle (3), ladite soupape (4) étant capable d'adopter une configuration de fuite autorisant la vapeur contenue au sein de l'appareil (1) à s'échapper hors de ce dernier par l'orifice (23A) et la soupape (4) selon une trajectoire d'échappement prédéterminée, ledit appareil (1) comprenant en outre un capteur de température (22A), ledit appareil (1) étant **caractérisé en ce que** ledit capteur de température (2A) est conçu pour pouvoir se trouver sur ladite trajectoire d'échappement, ladite soupape (4) étant constituée d'au moins un premier élément (4A) conçu pour rester attaché en permanence au couvercle (3) en correspondance avec l'orifice (23A) et d'un deuxième élément (4B) attaché de façon amovible audit premier élément (4A) de façon que lesdits premier et deuxième éléments (4A, 4B) puissent être séparés manuellement afin de faciliter le nettoyage de la soupape (4).

2. Appareil (1) selon la revendication 1 **caractérisé en ce que** ladite soupape (4) forme par elle-même et à elle seule une unité de soupape distincte et indépendante.

3. Appareil (1) de cuisson d'aliments selon la revendication 1 ou 2 **caractérisé en ce qu'**il comprend un système de verrouillage pour verrouiller le couvercle (3) à la cuve (2).

4. Appareil (1) de cuisson d'aliments selon les revendications 2 et 3 **caractérisé en ce qu'**il comprend un organe de commande manuelle (11) dudit système de verrouillage qui fait partie d'un ensemble unitaire de commande (300) monté sur le couvercle (3), ladite unité de soupape étant distincte et indépendante dudit ensemble unitaire de commande.

5. Appareil (1) de cuisson selon l'une des revendications 3 et 4 **caractérisé en ce qu'**il comprend un sous-ensemble de couvercle qui inclut à la fois au moins ledit couvercle (3) et un support (10) attaché audit couvercle (3) de façon que ce dernier puisse se déplacer relativement audit support entre deux positions correspondant respectivement à une configuration de déverrouillage et une configuration de verrouillage dudit sous-ensemble de couvercle, le sous-ensemble de couvercle et la cuve (2) étant conçus pour être réunis selon au moins un agencement relatif prédéterminé permettant audit système de verrouillage de verrouiller le couvercle (3) à la cuve (2) par déplacement du couvercle (3) relativement au support (10) afin de faire passer le sous-ensemble de couvercle de sa configuration de déverrouillage à sa configuration de verrouillage.

6. Appareil (1) selon la revendication 5 **caractérisé en ce que** lesdits support (10) et couvercle (3) embarquent respectivement l'un et l'autre desdits capteur de température (22A) et soupape (4) pour que lorsque ledit sous-ensemble de couvercle se trouve en configuration de verrouillage ledit capteur de température (22A) se trouve sensiblement sur ladite trajectoire d'échappement et pour que lorsque ledit sous-ensemble de couvercle se trouve en configuration de déverrouillage ledit capteur de température (22A) se trouve sensiblement en dehors de ladite trajectoire d'échappement.

7. Appareil (1) selon la revendication 6 **caractérisé en ce qu'**il comprend un module indépendant (24) qui embarque ledit capteur de température (22A) et qui est conçu pour être attaché de façon amovible audit support (10), lesdits module indépendant (24) et support (10) étant de préférence pourvus de moyens d'attache complémentaires (25, 26) respectifs conçus pour coopérer, de préférence par attraction magnétique, afin d'attacher, de préférence de façon amovible, ledit module indépendant (24) au support (10).

8. Appareil (1) selon l'une des revendications 5 à 7 **caractérisé en ce que** ledit système de verrouillage est un système de verrouillage à baïonnette, ledit support (10) étant attaché audit couvercle (3) de façon que ce dernier puisse pivoter relativement audit support (10) entre lesdites deux positions selon un axe vertical central (X-X'), ledit agencement relatif prédéterminé permettant audit système de verrouillage à baïonnette de verrouiller le couvercle (3) à la cuve (2) par pivotement du couvercle (3) relativement au support (10) selon ledit axe vertical central (X-X').

9. Appareil (1) selon les revendications 4 et 8 **caractérisé en ce que** ledit organe de commande manuelle (11) est attaché audit support (10) de façon à pouvoir être déplacé manuellement relativement à ce dernier entre des positions de verrouillage et déverrouillage, ledit appareil (1) comprenant un dispositif de transformation du déplacement de l'organe de commande manuelle (11) en pivotement du couvercle (3) relativement au support (10) selon ledit axe vertical central (X-X'), ledit organe de commande (11) étant de préférence monté à pivotement relativement audit support (10) selon un axe radial de pivotement (Y-Y') qui est de préférence perpendiculaire audit axe vertical central (X-X').

10. Appareil (1) de cuisson d'aliments sous pression selon l'une des revendications 5 à 9 **caractérisé en ce que** lesdits support (10) et cuve (2) sont conçus pour interagir, dès lors que le sous-ensemble de couvercle en configuration de déverrouillage et la cuve (2) sont réunis selon ledit agencement relatif prédéterminé, afin de sensiblement empêcher ledit support (10) de pouvoir pivoter relativement à la cuve (2) lorsque l'organe de commande (11) est déplacé entre ses positions de déverrouillage et de verrouillage.

11. Appareil (1) selon l'une des revendications 1 à 10 **caractérisé en ce que** ladite soupape (4) inclut elle-même un obturateur (40) mobile entre une position de fermeture dans laquelle il empêche la vapeur contenue au sein de l'appareil (1) de s'échapper hors de l'appareil (1) et une position d'ouverture dans laquelle il autorise la vapeur contenue au sein de l'appareil (1) à s'échapper hors de ce dernier selon ladite trajectoire d'échappement prédéterminée, ledit obturateur (40) mobile faisant partie dudit deuxième élément (4B), ladite soupape (4) incluant elle-même de préférence un siège tubulaire (41) s'abouchant audit orifice (23A), ledit siège (41) faisant de préférence partie dudit premier élément (4A).

12. Appareil selon l'une des revendications 1 à 11 **caractérisé en ce que** ladite soupape (4) est pourvu d'un organe de canalisation de la vapeur conçu pour impartir à la vapeur s'échappant hors de l'appareil (1) une trajectoire d'échappement sensiblement ascendante, de bas en haut, ledit capteur de température (22A) étant destiné à venir surplomber ladite soupape (4).

13. Appareil (1) selon la revendication 12 **caractérisé en ce que** ladite soupape (4) présente, selon la direction verticale (W-W'), une hauteur hors-tout (H) sensiblement invariable.

14. Appareil (1) selon l'une des revendications 1 à 13 **caractérisé en ce que** ledit capteur (22A) est maintenu à distance de ladite soupape (4) y compris lorsqu'il se trouve sur ladite trajectoire d'échappement.

## Patentansprüche

1. Gerät (1) zum Kochen von Nahrungsmitteln unter Druck im Beisein von Dampf, umfassend einen Behälter (2), einen Deckel (3) sowie ein Ventil (4) zum Regulieren des Druckanstiegs, das auf dem Deckel (3) korrespondierend mit einer Öffnung angebracht ist, die durch den Deckel (3) hindurch vorgesehen ist, wobei das Ventil (4) geeignet ist, eine Leckagestellung einzunehmen, die es dem in dem Gerät (1) enthaltenen Dampf erlaubt, aus diesem letztgenannten durch die Öffnung (23A) und das Ventil (4) entlang einer vorbestimmten Ausströmungsbahn zu entweichen, wobei das Gerät (1) ferner einen Temperatursensor (22A) umfasst, wobei das Gerät (1) **dadurch gekennzeichnet ist, dass** der Temperatursensor (22A) eingerichtet ist, um sich auf der Ausströmungsbahn zu befinden, wobei das Ventil (4) von mindestens einem ersten Element (4A), das eingerichtet ist, um permanent am Deckel (3) korrespondierend mit der Öffnung (23A) befestigt zu sein, und einem zweiten Element (4B) gebildet ist, das abnehmbar am ersten Element (4A) befestigt ist, so dass die ersten und zweiten Elemente (4A, 4B) manuell getrennt werden können, um die Reinigung des Ventils (4) zu erleichtern.

2. Gerät (1) nach Anspruch 1, **dadurch gekennzeichnet, dass** das Ventil (4) für sich und für sich allein eine getrennte und unabhängige Ventileinheit bildet.

3. Gerät (1) zum Kochen von Nahrungsmitteln nach Anspruch 1 oder 2, **dadurch gekennzeichnet, dass** es ein Verriegelungssystem umfasst, um den Deckel (3) auf dem Behälter (2) zu verriegeln.

4. Gerät (1) zum Kochen von Nahrungsmitteln nach den Ansprüchen 2 und 3, **dadurch gekennzeichnet, dass** es ein manuelles Steuerelement (11) des Verriegelungssystems umfasst, das Teil einer Steuereinheit (300) ist, die auf dem Deckel (3) angebracht ist, wobei die Ventileinheit von der Steuereinheit getrennt und unabhängig ist.

5. Gerät (1) zum Kochen nach einem der Ansprüche 3 und 4, **dadurch gekennzeichnet, dass** es eine Deckelunterbaugruppe umfasst, die sowohl zumindest den Deckel (3) und einen Träger (10) einschließt, der am Deckel (3) befestigt ist, so dass sich dieser letztgenannte in Bezug zum Träger zwischen zwei Positionen verlagern kann, die einer Entriegelungsstellung bzw. einer Verriegelungsstellung der Deckelunterbaugruppe entsprechen, wobei die Deckelunterbaugruppe und der Behälter (2) eingerichtet sind, um in zumindest einer vorbestimmten relativen Anordnung verbunden zu sein, die es dem Verriegelungssystem ermöglicht, den Deckel (3) auf dem Behälter (2) durch Verlagerung des Deckels (3) in Bezug zum Träger (10) zu verriegeln, um die Deckelunterbaugruppe von ihrer Entriegelungsstellung in ihre Verriegelungsstellung zu bringen.

6. Gerät (1) nach Anspruch 5, **dadurch gekennzeichnet, dass** der Träger (10) und der Deckel (3) jeweils eines der Elemente Temperatursensor (22A) und Ventil (4) tragen, so dass, wenn sich die Deckelunterbaugruppe in der Verriegelungsstellung befindet, sich der Temperatursensor (22A) im Wesentlichen auf der Ausströmungsbahn befindet, und wenn sich die Deckelunterbaugruppe in der Entriegelungsstellung befindet, sich der Temperatursensor (22A) im Wesentlichen außerhalb der Ausströmungsbahn befindet.

7. Gerät (1) nach Anspruch 6, **dadurch gekennzeichnet, dass** es ein unabhängiges Modul (24) umfasst, das den Temperatursensor (22A) trägt, und das eingerichtet ist, um abnehmbar am Träger (10) befestigt zu sein, wobei das unabhängige Modul (24) und der Träger (10) vorzugsweise mit jeweiligen komplementären Befestigungsmitteln (25, 26) versehen sind, die eingerichtet sind, um, vorzugsweise durch magnetische Anziehung, zusammenzuwirken, um, vorzugsweise abnehmbar, das unabhängige Modul (24) am Träger (10) zu befestigen.

8. Gerät (1) nach einem der Ansprüche 5 bis 7, **dadurch gekennzeichnet, dass** das Verriegelungssystem ein Bajonett-Verriegelungssystem ist, wobei der Träger (10) am Deckel (3) derart befestigt ist, dass dieser letztgenannte in Bezug zum Träger (10) zwischen den zwei Positionen entlang einer vertikalen Mittelachse (X-X') schwenken kann, wobei es die vorbestimmte relative Anordnung dem Bajonett-Verriegelungssystem ermöglicht, den Deckel (3) auf dem Behälter (2) durch Schwenken des Deckels (3) in Bezug zum Träger (10) entlang der vertikalen Mittelachse (X-X') zu verriegeln.

9. Gerät (1) nach den Ansprüchen 4 und 8, **dadurch gekennzeichnet, dass** das manuelle Steuerelement (11) am Träger (10) derart befestigt ist, dass es manuell in Bezug zu diesem letztgenannten zwischen Verriegelungsund Entriegelungspositionen verlagert werden kann, wobei das Gerät (1) eine Vorrichtung zur Umwandlung der Verlagerung des manuellen Steuerelements (11) in ein Schwenken des Deckels (3) in Bezug zum Träger (10) entlang der vertikalen Mittelachse (X-X') umfasst, wobei das Steuerelement (11) vorzugweise schwenkbar in Bezug zum Träger (10) entlang einer radialen Schwenkachse (Y-Y') angebracht ist, die vorzugsweise zu der vertikalen Mittelachse (X-X') senkrecht ist.

10. Gerät (1) zum Kochen von Nahrungsmitteln unter Druck nach einem der Ansprüche 5 bis 9, **dadurch gekennzeichnet, dass** Träger (10) und Behälter (2) eingerichtet sind, um zu interagieren, sobald die Deckelunterbaugruppe in Entriegelungsstellung und der Behälter (2) in der vorbestimmten relativen Anordnung verbunden sind, um im Wesentlichen den Träger (10) daran zu hindern, in Bezug zum Behälter (2) schwenken zu können, wenn das Steuerelement (11) zwischen seinen Entriegelungsund Verriegelungspositionen verlagert wird.

11. Gerät (1) nach einem der Ansprüche 1 bis 10, **dadurch gekennzeichnet, dass** das Ventil (4) selbst ein Verschlusselement (40) enthält, das zwischen einer Schließposition, in der es den in dem Gerät (1) enthaltenen Dampf daran hindert, aus dem Gerät (1) zu entweichen, und einer Öffnungsposition, in der es dem in dem Gerät (1) enthaltenen Dampf gestattet, aus diesem letztgenannten entlang der vorbestimmten Ausströmungsbahn zu entweichen, beweglich ist, wobei das bewegliche Verschlusselement (40) Teil des zweiten Elements (4B) ist, wobei das Ventil (4) selbst vorzugsweise einen röhrenförmigen Sitz (41) einschließt, der an der Öffnung (23A) endet, wobei der Sitz (41) vorzugsweise Teil des ersten Elements (4A) ist.

12. Gerät nach einem der Ansprüche 1 bis 11, **dadurch gekennzeichnet, dass** das Ventil (4) mit einem Element zum Kanalisieren des Dampfes versehen ist, das eingerichtet ist, um dem aus dem Gerät (1) entweichenden Dampf eine im Wesentlichen aufsteigende Ausströmungsbahn von unten nach oben vorzugeben, wobei der Temperatursensor (22A) dazu bestimmt ist, das Ventil (4) zu überragen.

13. Gerät (1) nach Anspruch 12, **dadurch gekennzeichnet, dass** das Ventil (4) in Vertikalrichtung (W-W') eine im Wesentlichen unveränderliche Gesamthöhe (H) aufweist.

14. Gerät (1) nach einem der Ansprüche 1 bis 13, **dadurch gekennzeichnet, dass** der Sensor (22A) von dem Ventil (4) beabstandet gehalten wird, auch wenn er sich auf der Ausströmungsbahn befindet.

## Claims

1. A utensil (1) for cooking food under pressure in the presence of steam, the utensil comprising a vessel (2), a lid (3), and a pressure regulation valve (4) mounted on the lid (3) in correspondence with an orifice formed through said lid (3), said valve (4) being capable of adopting a leakage configuration allowing the steam contained within the utensil (1) to escape out therefrom through the orifice (23A) and the valve (4) along a predetermined escape path, said utensil (1) further comprising a temperature sensor (22A), said utensil (1) being **characterized in that** said temperature sensor (22A) is designed to be capable of lying on said escape path, said valve (4) being constituted by at least a first element (4A) designed to remain permanently attached to the lid (3), in correspondence with the orifice (23A), and a second element (4B) removably attached to said first element (4A) so that said first and second elements (4A, 4B) can be separated manually in order to facilitate cleaning the valve (4).

2. A utensil (1) according to claim 1 **characterized in that** said valve (4) itself forms, on its own, a valve unit that is distinct and independent.

3. A cooking utensil (1) for cooking food according to claim 1 or claim 2, **characterized in that** it includes a locking system for locking the lid (3) to the vessel (2).

4. A cooking utensil (1) for cooking food according to claims 2 and 3, **characterized in that** it includes a manual control member (11) for said locking system that forms part of a unitary control assembly (300) mounted on the lid (3), said valve unit being distinct and independent of said unitary control assembly.

5. A cooking utensil (1) according to claim 3 or claim 4, **characterized in that** it has a lid subassembly that includes both at least said lid (3) and a support (10) attached to said lid (3) so that it can move relative to said support between two positions corresponding respectively to an unlocking configuration and a locking configuration of said lid subassembly, the lid subassembly and the vessel (2) being designed to be united in at least one predetermined relative arrangement enabling said locking system to lock the lid (3) to the vessel (2) by moving the lid (3) relative to the support (10) so as to cause the lid subassembly to pass from its unlocking configuration to its locking configuration.

6. A utensil (1) according to claim 5 **characterized in that** said support (10) and said lid (3) carry respective ones of said temperature sensor (22A) and said valve (4) so that when said lid subassembly is in the locking configuration, said temperature sensor (22A) lies substantially on said escape path and so that when said lid subassembly is in an unlocking configuration, said temperature sensor (22A) lies substantially off said exhaust path.

7. A utensil (1) according to claim 6 **characterized in that** it includes an independent module (24) that carries said temperature sensor (22A) and that is designed to be releasably attached to said support (10), said independent module (24) and said support (10) being provided with respective complementary attachment means (25, 26) designed to cooperate, preferably by magnetic attraction, in order to attach, preferably releasably, said independent module (24) to the support (10).

8. A utensil (1) according to any one of claims 5 to 7, **characterized in that** said locking system is a bayonet-fitting locking system, said support (10) being attached to said lid (3) in such a manner that said lid can pivot relative to said support (10) between said two positions about a central vertical axis (X-X'), said predetermined relative arrangement enabling said bayonet-fitting locking system to lock the lid (3) to the vessel (2) by the lid (3) pivoting relative to the support (10) about said central vertical axis (X-X).

9. A utensil (1) according to claim 4 and claim 8, **characterized in that** said manual control member (11) is attached to said support (10) in such a manner as to be capable of being moved manually relative to said support (10) between locking and unlocking positions, said utensil (1) including a transformation device for transforming the movement of the manual control member (11) into pivoting of the lid (3) relative to the support (10) about said central vertical axis (X-X'), said control member (11) being preferably mounted to pivot relative to said support (10) about a radial axis of pivoting (Y-Y') that is preferably perpendicular to said central vertical axis (X-X').

10. A cooking utensil (1) for cooking food under pressure according to any one of claims 5 to 9, **characterized in that** said support (10) and said vessel (2) are designed to interact, whenever the lid subassembly in the unlocking configuration and the vessel (2) are united in said predetermined relative arrangement, in order substantially to prevent said support (10) from being able to pivot relative to the vessel (2) when the control member (11) is moved between its unlocking and locking positions.

11. A utensil (1) according to any one of claims 1 to 10, **characterized in that** said valve (4) itself includes a valve member (40) movable between a closure position in which it prevents the steam contained within the utensil (1) from escaping out from the utensil (1), and an opening position in which it allows the steam contained within the utensil (1) to escape out therefrom along said predetermined escape path, said movable valve member (40) forming part of said second element (4B), said valve (4) itself including preferably a tubular seat (41) opening out into said orifice (23A), said seat (41) preferably forming part of said first element (4A).

12. A utensil according to any one of claims 1 to 11, **characterized in that** said valve (4) is provided with a steam channelling member designed to impart a substantially upward escape path on the steam escaping from the utensil (1), said temperature sensor (22A) being designed to overlie said valve (4).

13. A utensil (1) according to claim 12, **characterized in that**, in the vertical direction (W-W'), said valve (4) has an overall height (H) that is substantially invariable.

14. A utensil (1) according to any one of claims 1 to 13, **characterized in that** said sensor (22A) is kept apart from said valve (4), including when it lies on said exhaust path.
